(19) Europäisches Patentamt
European Patent Office
Office européen des brevets

(11) **EP 1 085 693 B1**

(12) **EUROPEAN PATENT SPECIFICATION**

(45) Date of publication and mention
of the grant of the patent:
**29.07.2009 Bulletin 2009/31**

(51) Int Cl.:
***H04L 12/24*** *(2006.01)* ***G06T 11/20*** *(2006.01)*

(21) Application number: **00118557.8**

(22) Date of filing: **26.08.2000**

(54) **Network visualization tool**

Werkzeug zur Darstellung von Netzwerken

Outil pour la visualisation de réseaux

(84) Designated Contracting States:
**CH DE FR GB LI**

(30) Priority: **13.09.1999 EP 99810817**

(43) Date of publication of application:
**21.03.2001 Bulletin 2001/12**

(73) Proprietor: **International Business Machines Corporation**
**Armonk, NY 10504 (US)**

(72) Inventors:
• **Klenk, Jürgen A.**
**8134 Adliswil (CH)**
• **Ziegler, Patrick**
**6374 Buochs (CH)**

(74) Representative: **Williams, Julian David**
**IBM Research GmbH**
**Zurich Research Laboratory**
**Säumerstrasse 4**
**Postfach**
**8803 Rüschlikon (CH)**

(56) References cited:
EP-A- 0 903 693    US-A- 4 953 106

• COLEMAN M K ET AL: "AESTHETICS-BASED GRAPH LAYOUT FOR HUMAN CONSUMPTION" SOFTWARE PRACTICE & EXPERIENCE, JOHN WILEY & SONS LTD. CHICHESTER, GB, vol. 26, no. 12, 1 December 1996 (1996-12-01), pages 1415-1438, XP000655611 ISSN: 0038-0644

• DAVIDSON R ET AL: "Drawing graphs nicely using simulated annealing" ACM TRANSACTIONS ON GRAPHICS, OCT. 1996, ACM, USA, vol. 15, no. 4, pages 301-331, XP002202334 ISSN: 0730-0301

• TUNKELANG D: "JIGGLE: Java interactive graph layout environment" GRAPH DRAWING. 6TH INTERNATIONAL SYMPOSIUM, GD'98. PROCEEDINGS, MONTREAL, QUE., CANADA, 13-15 AUG. 1998, pages 413-422, XP002200193 1998, Berlin, Germany, Springer-Verlag, Germany ISBN: 3-540-65473-9

• KAMPS T ET AL: "Constraint-based spring-model algorithm for graph layout" PROCEEDINGS OF GRAPH DRAWING. SYMPOSIUM ON GRAPH DRAWING, GD 95, PASSAU, GERMANY, 20-22 SEPT. 1995, pages 349-360, XP008003623 1996, Berlin, Germany, Springer-Verlag, Germany ISBN: 3-540-60723-4

• GUPTA A K ET AL: "Optimal three-dimensional layouts of complete binary trees" INFORMATION PROCESSING LETTERS, 19 OCT. 1987, NETHERLANDS, vol. 26, no. 2, pages 99-104, XP008003629 ISSN: 0020-0190

• BIENEMANN M ET AL: "A simulated annealing approach to the general graph layout problem" 14TH SYMPOSIUM ON OPERATIONS RESEARCH, ULM, WEST GERMANY, 6-8 SEPT. 1989, vol. 62, pages 255-260, XP008003628 Methods of Operations Research, 1990, West Germany ISSN: 0078-5318

**Description**

TECHNICAL FIELD

The invention concerns a scheme for visualizing networks and systems based thereon.

BACKGROUND OF THE INVENTION

Data, presented as rows and columns of numbers and text, typically is raw and undifferentiated. To be useful, raw data must be organized into intelligible categories. Data can also be obscure in the sense that its relevant attributes and relationships are hidden. Normally, the user must conduct an investigation (e.g. by using appropriate data mining tools) to discover such data relationships.

If one presents data in form of a graph - a representational scheme herein referred to as network - one can supply meaning and context. That is, data - if grouped into relevant categories - can be more easily comprehended. One approach to increasing comprehension of data is data visualization. Data visualization utilizes tools, such as display space plots, to represent data within a display space defined by the coordinates of each relevant data dimensional axis.

Linguists, mathematicians, computer scientists, and representatives of many other groups have a need for tools that allow to visualize networks. Quite some progress has been made in the development of software tools that serve that purpose.

Software tools are known that can be used to create nicely formatted trees. Trees are natural structures that appear in many applications of computer science (data structures, databases, networks, etc.). These software tools usually require textual data input and are able to format trees, make small changes to the nodes and layout, and align nodes. Most of the currently available software tools are producing 2-dimensional (2D) trees only. These tools are suited for drawing grammar trees, or trees that allow the visual inspection of networks.

Software tools are now available that allow to generate 3-dimensional (3D) tree drawings. An example is the cone tree system from Xerox PARC, as described by George Robertson, Jock Mackinlay, and Stuart Card in "Information visualization using 3D interactive animation", Communications of the ACM, 1993, 36(4), 57-71. The Xerox PARC cone tree is a radial tree layout in three dimensions presented in Euclidean three-dimensional space.

Another attempt at data visualization through a 3D mapping is illustrated in the CAM Tree developed by Xerox PARC and described by M. Clarkson, in An Easier Interface, Byte Magazine, February 1991. The CAM Tree is essentially a three-dimensional ROIOdex with limited ability to represent anything more than the hierarchical structure of a data base. The attributes of the data remain hidden.

Traditionally, software tools for visualization of networks portray the respective data in a tree-like format only, as outlined above.

There are other areas where software tools for visualization are employed. Examples are the visualization tools used in connection with high speed logic and circuit simulators that are used throughout the computer industry to aid in the design of complex systems. The high performance simulators generate enormous amounts of data that are displayed on a screen to allow a user to intervene. An example of such a system is described and claimed in US Patent 5,043,920 with title "Multi-dimension visual analysis".

Visual presentation systems in existence today do not provide a developer or operator means of easily identifying glitches or bottlenecks in complex communication systems. For example, a developer or operator is forced to make inferences concerning the relationships between various types of hardware elements of a network that are graphically presented on a screen in order to understand how to improve the respective network.

Another area where networks have become important are site maps on the World Wide Web. Here each page is seen as a node in a network, and the links between the pages are the links in the network. Site maps allow a user to easily navigate through a complex site. In addition, they are useful to mine the information on the World Wide Web, e.g. by analyzing which sites have many incoming or outgoing links, thus identifying authority sites on a certain subject or reference sites.

There are a number of attempts in the literature to solve certain problems which occur when drawing networks (known as graph drawing problems). A recent overview is given in the article "An experimental comparison of four graph drawing algorithms" by Di Battista et. al., Computational Geometry 7, 1997, pp. 303-325. These algorithms are used for 3D-visualization of non-hierarchical networks.

In the article "An algorithm for drawing a hierarchical graph" by R. Tamassia et. al, Int. J. Comput. Geom. Appl. (Singapore) Vol. 6, No. 2 June 1996, pp. 145-155 an algorithm to optimally draw a hierarchical network is described. However, this algorithm uses only a line for each level of hierarchy to arrange the elements and requires the initial placement of elements on the top and bottom hierarchy lines.

The article "GIOTTO3D: a system for visualizing hierarchical structures in 3D" by R. Tamassia et. al., Graph Drawing, Symposium on Graph Drawing, GD '96, Proceedings 1997, pp. 193-198, describes a tool that can arrange a hierarchical network in an optimal 3D-arrangement. A bend-minimization algorithm (from a 2D graph drawing tool) is used.

The article Coleman Mk et al: "Aesthetics-based Graph Layout for Human Consumption" SOFTWARE-PRACTICE AND EXPERIENCE, John Wiley & Sons, GB, vol. 26 No. 12, I December 1996, pages 1415-1438, XP000655611 ISSN: 0038-0644 describes an Aesthetic Graph Layout (AGOL) approach which models graph layout as a multi-objective optimization problem, where the value of a layout is determined by multiple user-controlled layout aesthetics. The article describes the uses of annealing and function gradients.

The article Davidson R et al "Drawing Graphs Nicely Using Simulated Annealing" ACM TRANSACTIONS ON GRAPHICS< OCT 1996, ACM, USA, vol. 15, no.4, pages 301-331, XP002202334 ISSN: 0730-0301 describes applying the paradigm of simulated annealing to the problem of drawing graphs nicely. Their algorithm deals with general undirected graphs with straight line edges and employs several simple criteria for the aesthetic quality of the result.

The article Tunkelang D: "Jiggle: Java interactive graph ;ayout environment" PROCEEDINGS, GRAPH DRAWING. 6TH INTERNATIONAL SYMPOSIUM GD'98. MONTREAL< QUE., CANADA, 13-15 Aug. 1998, pages 413-422 XPOO22000193 1998, Berlin Germany, Springer-Verlag, Germany ISBN:3-540-65473-9 describes JIGGLE, a Java-based platform for experimenting with numerical optimisation approaches to general graph layout. Its features include an optimiusation procedure based on the conjugate gradient method.

European Patent Application EP-A-0 903 693 (MITSUBISHI ELECTRIC CORP) 24 March 1999, discloses an interactive system and method for drawing graphs in which a user applies constraints to obtain a visually pleasing display. The user adds nodes and edges to the graph and then Visual Organization Feature sonstraints are applied to the nodes A generalised spring algorithm is used by the ssystem.

There are many more areas where visualization tools can be employed since almost all intelligent systems rely heavily on networks and their visualization.

Thus there is a demand for a robust 3D data representation method and system that overcomes problems of known approaches and systems.

The present invention seeks to improve the human computer interaction.

The present invention also seeks to provide a scheme and system for visualizing elements of a network on a display.

The present invention further seeks to provide a scheme for acting upon elements of network that are displayed on a display.

## SUMMARY OF THE INVENTION

The objectives of the present invention have been accomplished by the methods, computer program products, computer program elements, and database systems as claimed.

A method and apparatus are presented for displaying three-dimensional navigable display space containing an aggregation of elements and links between elements. A special perspective is provided by processing and displaying the data structure so that a user can see a representative overview of the entire aggregation of elements and links (or a subset thereof) that have been selected for display together on a display screen.

The present invention is well suited for processing large amounts of information and for displaying that information graphically.

The invention concerns a scheme and corresponding systems facilitating the visual exploration of hierarchical and non-hierarchical networks. The present invention provides an easily comprehensible view of the whole network or a part thereof and allows interactive editing of the network, and/or its elements, and/or its links.

The present scheme makes abstract relationships or associations between network elements more concrete and accessible.

Furthermore, the present invention may use space as a cue, e.g., by placing related elements closer together than elements that have no relationship or only a remote relationship.

The present invention allows to introduce depths into a space such that the depth conveys distance where that elements in the foreground are in the focus of attention.

Advantages of the present invention are addressed in connection with the detailed description or are apparent from the description.

## DESCRIPTION OF THE DRAWINGS

The invention is described in detail below with reference to the following schematic drawings.

**FIG. 1**      is a schematic representation of a simple network with two elements and one link.

**FIG. 2**      is a schematic representation of a cylindrical grid as used for the visualization according to the present invention.

**FIG. 3**    is a schematic representation of a network with elements placed on various positions, in accordance with the present invention

**FIG. 4**    is a schematic visualization of a network with many elements and links, in accordance with the present invention.

**FIG. 5**    is a schematic visualization of an optimized arrangement of the network of Figure 4, in accordance with the present invention.

**FIG. 6A**    is a schematic hardware structure of a visualization system, in accordance with the present invention.

**FIG. 6B** .   is a schematic logical block diagram block diagram of the visualization system of Figure 6A

**FIG. 7A**    is a schematic hardware structure of another visualization system, in accordance with the present invention.

**FIG. 7B**    is a schematic logical block diagram block diagram of the visualization system of Figure 7A.

DESCRIPTION OF PREFERRED EMBODIMENTS

In the following, the basic concept of the present invention is described. In order to explore, construct, or maintain a network it is helpful that the network be visualized in an easily comprehensible way, so that its topological structure can be easily explored and modified, if necessary.

Studies show that people perceive a visualization of a network as easily comprehensible if the elements of the network are arranged such that links between the elements exhibit a minimal entanglement and at the same time a minimal length. However, in most cases these two requirements of minimal entanglement and minimal length are mutually exclusive, so that one cannot expect to find an arrangement of the elements which yields both a minimal entanglement and a minimal length of their links. Instead, the most easily comprehensible arrangement of the elements will only have a near minimal entanglement and a near minimal length of their links. In the present context we refer to the above described arrangement of elements of a non-hierarchical network as the optimal arrangement.

It is an additional requirement for the arrangement of elements that they be kept apart at a minimal distance so that they can be clearly distinguished. This requirement can be fulfilled if one provides a grid (lattice with individual grid points) and requires that the elements be arranged on the grid points only. For instance as a grid one might specify a square lattice or a circle with a given number of grid points distributed in equal angular distance. If a network of $n$ nodes is to be optimally arranged on a grid with $k$ grid points then a combinatorial calculation shows that there are $k! / (k-n)!$ possible arrangements of the elements (where $k! = 1*2*...*k$ denotes the factorial of $k$), which renders the obvious solution to find the optimal arrangement by considering all possible arrangements of exponential complexity and thus in general unsolvable for computer systems.

Before addressing different aspects and embodiments, the relevant terms and expressions are defined and explained.

**Network:** A network is a graph comprising elements (nodes, vertices, and the like) and links (connections, edges, and the like) between some of the elements. An example of a network is a data structure as described in PCT patent application with application number PCT/IB99/00231, filed on 11 February 1999, with priority date of 2 June 1998, which is currently assigned to the present assignee. In this example the network comprises semantical units (elements) and connection objects (links) between these semantical units. This co-pending patent application is incorporated in its entirety.

The expression "element" is herein used to describe an element of a network (graph), database, data structure, or some other form of representation. Examples of elements are: files (e.g., computer or machine readable files), objects, information kept in a cell of a database, a database record, an image from an image repository, a multimedia object (e.g., an avi or mpeg movie), a semantical unit, or a physical network element of a communications network (such as a switch, router, node, gateway, computer, access device and so forth).

A "link" can be a physical or logical link between elements. Such a link can describe a relationship or connection between the respective elements. There is a variety of meanings that can be assigned to a link. In the above-mentioned patent application networks are described where semantical units (elements) are connected by so-called connection objects (links), whose meanings can be similarities, (information) exchanges, groupings, role descriptions, etc.

The word "network" is herein used to describe any collection or aggregation of elements and links. For the purposes of the present invention it does not matter whether the network is structured or unstructured. For example, a network can be a computer program-produced network (e.g., a network with application-specific information). Other examples are communications networks (e.g., comprising switches, routers, nodes, gateways, computers, access devices, or any combination thereof), knowledge databases, networks or graphs representing weather data or weather maps, and the like.

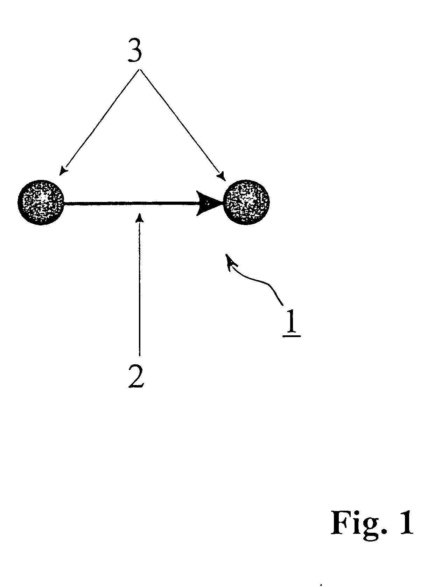

A simple network 1 is schematically represented in Figure 1. In the present example the network 1 consists of elements which are visualized as spheres 3, and a link which is visualized as arrow 2. Usually a link 2 connects two elements 3, as illustrated in Figure 1.

The expression "network data" is used to describe some collection of data that represent the elements and links of a network. The network data can be structured or unstructured.

The network data can be derived from raw data. Raw data are data in some idiosyncratic format. These raw data come in many forms, from spreadsheets to some input text, textual strings, output data of some application program, and so forth. The transformation of raw data into network data typically involves the loss or gain of information.

In order to be able to visualize network data, these data have to be transformed or mapped into a so-called "data structure". This data structure then can be processed and displayed on a graphics display of a graphics system. Such a data structure can also be stored on a medium for later use, or it can be transmitted via a communications channel. The data structure may for example augment a spatial substrate with marks and graphical properties to encode information, as described on pages 26-34 of the book "Information Visualization; Using Vision to Think", Stuart K. Card et al., Morgan Kaufmann Publishers, Inc., San Francisco, CA, USA, 1999. To be a good data structure, it is important that the mapping from the network data into the data structure preserves the data. Network data can be transformed or mapped into data structures in multiple ways. We hereinafter address a family or group of algorithms which can be used for transformation of network data into some data structure.

**Fractal hierarchical network:** A network is called hierarchical if, besides the normal, non-scaling links, there are also scaling links. Examples are: a license agreement, a joint project agreement, and an employment contract which are all grouped in the semantical unit (element) 'agreements' by their similarity (they are all agreements), while a liability provision, a license grant provision, and an arbitration provision are all grouped in the semantical unit (element) 'agreement' by their functional connection (they are all functional parts or elements of an agreement).

A hierarchical network is called fractal if the following four conditions are satisfied:

- All elements are similar (derived from one template).

- All links are similar (derived from one template).

- Links may also be elements.

- Hierarchical links are possible, and at least one element must have a hierarchical link.

When visualizing a hierarchical network the hierarchical structure must be clearly visible, which is achieved by arranging the elements in vertically stacked layers which correspond to the levels of hierarchy. Here again the visualization of the hierarchical network must be easily comprehensible, which means that the elements must be arranged in such a way that there is a near minimal entanglement and a near minimal length of links within each layer and of links between layers. In this invention we refer to the above described arrangement of elements of a hierarchical network as the optimal arrangement.

It is also a requirement for a hierarchical network and a fractal hierarchical network to arrange its elements such that they are kept apart a minimal distance so that they can be clearly distinguished. This requirement can be fulfilled if one provides a grid (lattice with individual grid points) and requires that the elements be arranged on the grid points only. For instance as a grid one might specify a cubic or a cylindrical lattice.

**Gradient Method:** A gradient method, as employed in connection with the present invention, starts with an arrangement of a plurality of elements on a predefined grid (herein referred to as current grid arrangement). These elements together with some links form a network. This current grid arrangement has a corresponding global value (initial global value). This global value corresponds to the ease of perception of the visualisation of the network, i.e. of the current grid arrangement. With the implementation of the present invention a decrease of the global value makes the visualization more easily comprehensible. The gradient method allows to produce from the current grid arrangement another grid arrangement of the plurality of elements that has a global value which is smaller than the initial global value, thus making the visualization of the other (new) grid arrangement more easily comprehensible. Ideally, one employs a gradient method which, depending on the implementation, reaches the minimal global value, or a near-minimal global value, i.e. the optimal or a near-optimal grid arrangement, very quickly. For the purposes of the present description the global value is considered to approach the minimal global value of the network if the global value is less than a specified threshold greater than the minimal global value.

Note that the threshold depends on the definition of the global value, i.e. its relation to the degree of comprehensibility of the visualization of the network.

A near minimal entanglement of the links is deemed to have been reached if the number of crossings of links (which is a measure of the degree of entanglement) is less than 50% greater than the minimal number of crossings of links. The minimal entanglement of the links is reached if the number of crossings of a particular arrangement is equal to the minimum number of crossings of links.

A near minimal length of the links is deemed to have been reached if the sum of the length of all links is less than 50% greater than the minimal length the of links. The minimal length of the links is reached if sum of the length of all links of a particular arrangement is equal to the minimal length of the links.

This means that the corresponding algorithm terminates in polynomial time, which renders the problem of finding the optimal or near-optimal arrangement computable. In order to reach this optimal or near-optimal arrangement in a few iterative steps (cycles) only, one may start to re-arrange the elements' position on the grid by looking for changes in the arrangement that lead to big changes in the global value. For this purpose one may define a gradient level or threshold that has to be reached or exceeded by any given step to make sure that only those changes of the grid arrangement are actually carried out that lead to a drastic reduction or increase of the global value. This gradient level or threshold may depend on the current iteration number and/or on the current global value. By doing so, one can ensure that only very few cycles are required until the global value converges to the minimal or near-minimal global value. Please note that in the following embodiments, algorithms (herein referred to as minimizing algorithms) are employed which decrease and eventually minimize the global value.

BASIC SCHEME OF THE PRESENT INVENTION

According to the present invention there is a basic process that is carried out in order to transform network data, which represent a plurality of elements and links between elements, into a data structure which has a global value that is the same or approximately the same as the network's minimal global value.

In a first step the network data are converted into an initial data structure which represents an initial grid arrangement of the plurality of elements. This initial grid arrangement has an initial global value and can be generated in many different ways by placing the elements of the plurality of elements on individual grid position of a lattice. This lattice (which may be asquare lattice or a circle lattice or a cubic lattice or a cylindrical lattice for example) may depend on various parameters, such as the resolution of the graphics display, the number of elements, the computation power of the system generating the data structure, and so forth. The initial grid arrangement can be a random arrangement of the elements, for example.

Then, a global value (global energy) is assigned to this initial grid arrangement. The global value depends on the initial grid arrangement of one or more elements with respect to the initial grid positions of said element(s)' neighbors and is herein referred to as initial global value.

Now, the initial grid arrangement is modified so as to generate another grid arrangement of the plurality of elements. For this purpose a gradient method is employed on the global value of the grid arrangement of the plurality of elements. A suited gradient method allows us to find after a number of iterations a suitable arrangement (preferably the optimal arrangement) of a given network or a part thereof on a given grid.

It is important that the algorithm which defines the gradient method describes a solution which is of polynomial complexity and thus solvable by computer systems.

It is desirable to employ an algorithm which is efficient and of low complexity such that one can realize an efficient and fast tool for visualizing networks.

According to one embodiment of the present invention, an optimal arrangement of the elements and links of a network is found by minimizing the total energy function of this network. The total energy function of the network is a function which depends on the arrangement of the elements on the grid and which measures a suitable combination of the total length of all links and the number of crossings of links. It is defined such that the smaller the result (i.e. the smaller the total energy (also called global value)) the more comprehensible the network looks. In addition, this total energy function may be equipped with a parameter that allows the user to continuously shift the emphasis between minimizing the total length of links and minimizing the entanglement of links. Other parameters or factors, e.g. a weight or a potential as further down described in connection with a knowledge database, can also be factored in when computing a data structure for visualization.

The minimizing algorithm which finds the optimal arrangement by minimizing the total energy is a gradient method. But because the problem is discrete (which means that there is a finite number of grid positions where the elements can be placed) ordinary gradient methods do not work since they require a complete underlying space such as $R^n$ (rather than the given grid space).

It is herein proposed to make the gradient method work anyway by defining a local energy function (individual value) for each element. This local energy function depends on the arrangement of the neighboring elements of a given element (or several elements) on the grid and measures a suitable combination of the total length of all links to the given elements, the total number of crossings of these links with (all) other links, and the total number of links to the given element(s). This combination further obeys the property that the weighted sum of all local energies yields the total energy (global value), where the weights are the number of links for each individual element or again a suitable function thereof. The gradient method then consists of selecting two elements (preferably with the help of the above local energy) whose transposition reduces the total energy as much as possible, and repeating this procedure until no further reduction of the total energy can be achieved, or at least until no large reduction of the total energy is expected anymore.

In detail, the present minimizing algorithm starts with an initial arrangement of the elements on the grid that is either obtained by randomly placing the nodes on the grid or by an arrangement algorithm that finds a reasonable first arrangement of the elements on the grid. This initial arrangement is then defined to be the current grid arrangement.

The local energy function allows to find the element with the highest local energy for any possible arrangement of the elements on the grid. For the current arrangement it is then this element with the highest local energy that is selected for a transposition with some other element. This other element is obtained by transposing the highest local energy element with any other element in the network and selecting the transposition that yields the least total energy for the new arrangement, provided this new total energy is lower than the current total energy. Since there are only *(n-1)* elements to check and checking can be done in polynomial time, this is a polynomial problem. Selecting the other element which is to be transposed with the highest local energy element can be optimized by reducing the search to only neighboring elements of the highest local energy element or any similar reduction scheme.

In this sense the algorithm is a gradient method because for any arrangement of the elements one finds a transposition that reduces the total energy. In fact, one even finds the transposition that is likely to maximally reduce the total energy. This new arrangement is then called the current arrangement and the minimizing algorithm repeats the above procedure until no transposition can be found that reduces the total energy which means that the optimal arrangement is reached. It is obvious that the repetitive use of the algorithm can be stopped at any time before the optimal arrangement is reached.

If none of the *(n-1)* transpositions yields a reduction in the total energy then one moves on to the element with the second highest local energy and tries all *(n-2)* possible transpositions (the transposition with the element with the highest total energy has already been checked in the previous step and does not need to be checked again, hence one has only *(n-2)* transpositions to check). Again one chooses the transposition that yields the least total energy for the new arrangement, provided this new total energy is lower than the current total energy. If there is such an arrangement with lower total energy, then this new arrangement is called the current arrangement and the minimizing algorithm repeats the procedure of the previous paragraph. If no transposition can be found that reduces the total energy then the element with the third highest local energy is selected and all (n-3) possible transpositions are tried. Again if a new arrangement with less total energy can be found then the algorithm makes it the current arrangement and continues from there by repeating the procedure of the previous paragraph, otherwise it continues with the element with the fourth highest local energy, and so on.

In the worst case this algorithm yields *(n-1) + (n-2) + (n-3) + ... + 2 + 1 = ½ \* n \*(n-1)* checks which is quadratic in *n*. The minimizing algorithm stops if none of the transpositions results in a reduction of the total energy.

It is possible that the minimizing algorithm terminates with a final arrangement that corresponds to a local minimum of the total energy, which means that there may be a different arrangement with yet a lower total energy. It has been observed that algorithms that rely on gradient methods sometimes terminate in such local minima (e.g. back propagation learning in neural networks). In this case a simulated annealing method may be in order, which means that after each step a random shuffling of the elements is allowed, where the amount of shuffling depends on the value of a variable called temperature. This allows the algorithm to jump out of local minima traps and find the global minimum of the total energy.

The success of the minimizing algorithm depends crucially on how well the definition of the total and local energies captures the fact that their values relate directly to the degree of comprehensibility of the visualization of the network. One possible definition is the following:

The length of a link is defined by the integer length of the shortest path through the grid. On a square lattice this would be the number of horizontal plus the number of vertical gridpoints the two elements are apart, while on a circle it would be the number of gridpoints between the two elements along the shorter of the two possible paths around the circle. The algorithm to determine the length may be a straightforward counting method, for example. The number of crossings of links is simply a counting problem. It can be done efficiently by a sweep-line algorithm, possibly adapted for the grid type (e.g., on a circle the standard sweep-line algorithm can be simplified by using a specific table which encodes where connections start and end).

Suppose that there are $n$ elements and $m$ links of total length $L$ and with total number of crossings $C$, and that each element $i$ has $k_i$ connections with a total length of $l_i$ and a total number of crossings $c_i$ $(1 \leq i \leq n)$. Then, a possible definition for the total energy $E$ and the local energy $e_i$ of each element $i$ is

$$E = 4 \cdot a \cdot C + 2 \cdot (1 - a) \cdot L$$

$$e_i = \frac{a \cdot c_i + (1-a) \cdot l_i}{\sqrt{k_i}}$$

This definition satisfies

$$E = \sum_{i=1}^{n} \sqrt{k_i} \cdot e_i$$

so that indeed the total energy is the weighted sum of the local energies. Here the variable $\alpha$ which is allowed to take values $0 \leq \alpha \leq 1$ is the parameter that allows the user to shift the emphasis between minimizing the number of crossings ($\alpha = 1$) and minimizing the total length of the links ($\alpha = 0$) or any combination thereof ($\alpha$ between $0$ and $1$).

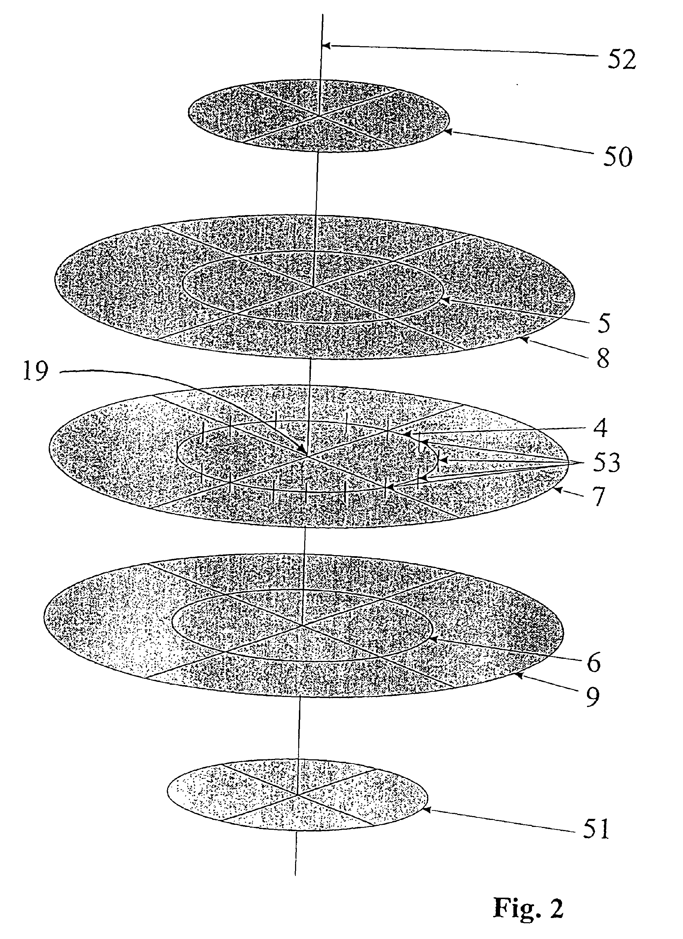

Finally, if one has a collection of grids (e.g. in hierarchical networks where one has several square lattices or circles stacked on top of each other, as shown in Figure 2) and the elements are not only connected on these grids but also between the grids then one can run the minimizing algorithm for each grid separately (to optimize only this grid) and also for all combinations of two grids separately (to optimize the connections between these two grids). The algorithm to find the optimal arrangement for the whole collection of grids can either optimze one grid after the other and then one combination of two grids after the other using the minimizing algorithm, or it can do one gradient step from the minimizing algorithm per grid and/or combination of two grids at a time, or a combination thereof, to find the optimal arrangement of elements. Finally, the collection of grids could be seen as one new grid, and a global value (global energy) could be assigned to this new grid, and the ordinary gradient method could be carried out on this new grid.

Further details of the present invention are now addressed and described in connection with Figures 2 - 5. As mentioned earlier, the elements of a network (or a part thereof) are placed on a grid for visualization. In the present example, the grid is cylindrical, resulting in a grid layout as illustrated in Figure 2. However, other grid layouts, e.g. cubical, may be chosen. The cylindrical grid layout consists of:

- the central position 19,

- the circle of first horizontal neighbors 4,

- the circle of first upward neighbors 5,

- the circle of first downward neighbors 6,

- the circle of second honrizontal-horizontal neighbors 7,

- the circle of second upward-horizontal neighbors 8,

- the circle of second downward-horizontal neighbors 9,

- the circle of second upward-upward neighbors 50,

- the circle of second downward-downward neighbors 51, and

- the y-axis 52.

Each circle has a variable number of grid positions 53. In Figure 2 the grid positions on the circle of first horizontal neighbors 4 are shown. In this example the circle of first horizontal neighbors 4 has 16 grid positions. Elements are placed either on the central position 19, or on a grid position on a circle. To improve the quality of the visualization, the little lines representing the grid positions are sometimes suppressed. When visualizing a hierarchical network the hierarchical structure must be clearly visible. This is achieved by arranging the elements in vertically stacked layers - as shown in Figure 2 for example - which correspond to the levels of hierarchy.

Elements can be grouped as follows:

- An element in the central position 19 is called a central element.

- An element on circle 4, 5, or 6 is called a first neighbor (to the central element).

- An element on circle 7, 8, 9, 50, or 51 is called a second neighbor (to the central element).

Links can be grouped as follows:

- A link from the central element to a first neighbor is called a 0-1-link.

- A link from a first neighbor to a first neighbor is called a 1-1-link.

- A link from a first neighbor to a second neighbor is called a 1-2-link.

- A link from a second neighbor to a second neighbor is called a 2-2-link.

To improve the quality of the visualization, the spheres and arrows representing the elements and links, respectively, can be selectively suppressed.

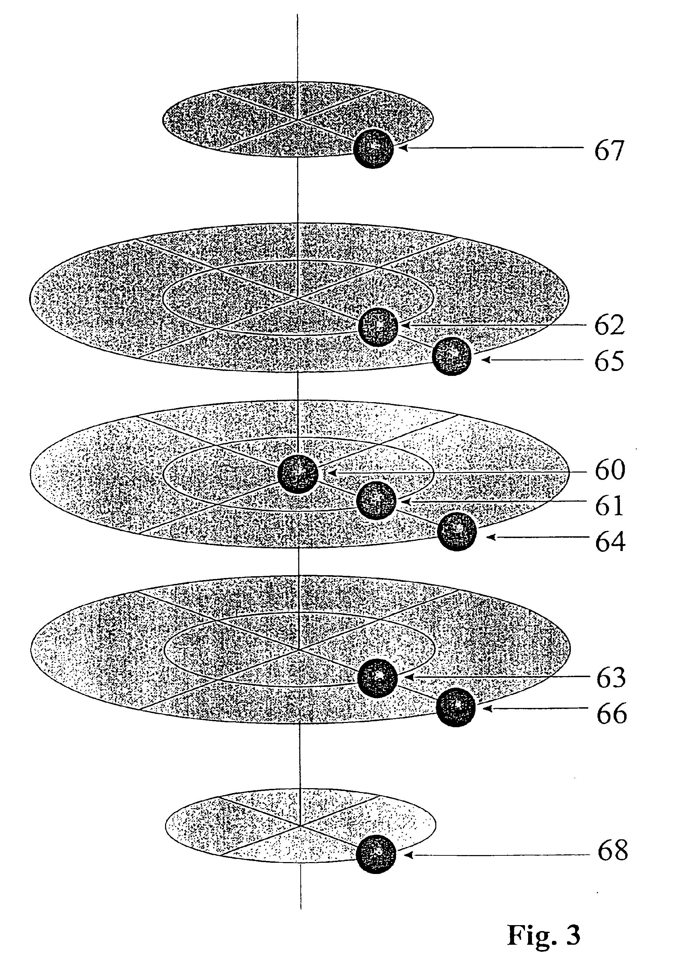

Figure 3 shows elements placed on various positions. In particular,

- the central element 60 is placed at the central position,

- a first horizontal neighbor 61 to the central element 60 is placed on the circle of first horizontal neighbors,

- a first upward neighbor 62 to the central element 60 is placed on the circle of first upward neighbors,

- a first downward neighbor 63 to the central element 60 is placed on the circle of first downward neighbors,

- a second horizontal-horizontal neighbor 64 to the central clement 60 is placed on the circle of second horizontal-horizontal neighbors,

- a second upward-horizontal neighbor 65 to the central element 60 is placed on the circle of second upward-horizontal neighbors,

- a second downward-horizontal neighbor 66 to the central element 60 is placed on the circle of second downward-horizontal neighbors,

- a second upward-upward neighbor 67 to the central element 60 is placed on the circle of second upward-upward neighbors,

- a second downward-downward neighbor 68 to the central element 60 is placed on the circle of second downward-downward neighbors,

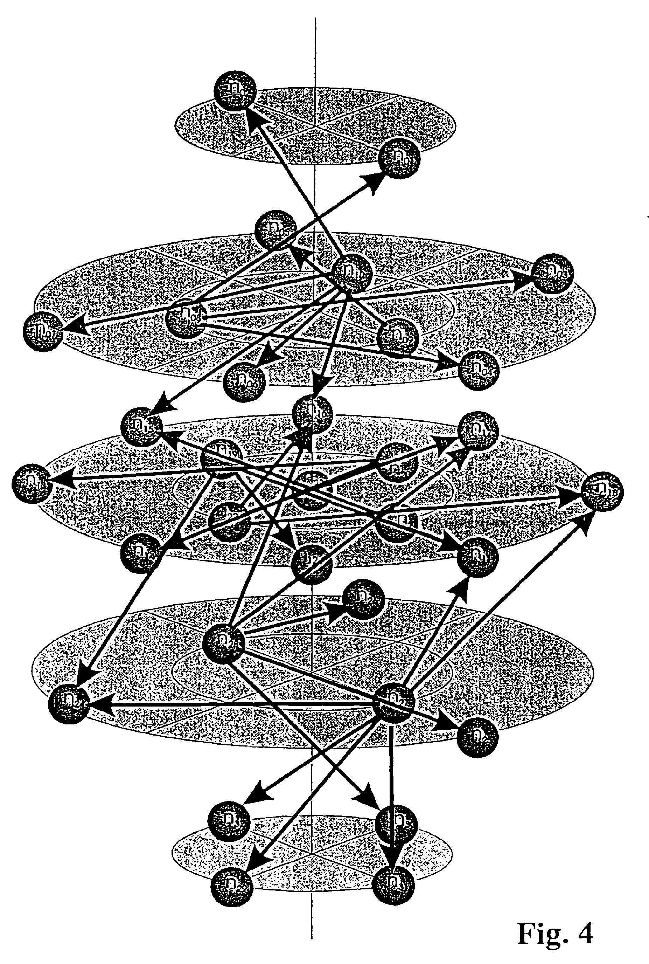

Figure 4 shows a visualization of a network. Each element has been placed on the circle it belongs to, but on random grid position on this circle. Although only 1-2-links are shown (all others are suppressed), this results in an almost incomprehensible visualization of the network. Each clement carries a unique identifier $n_{xy}$,

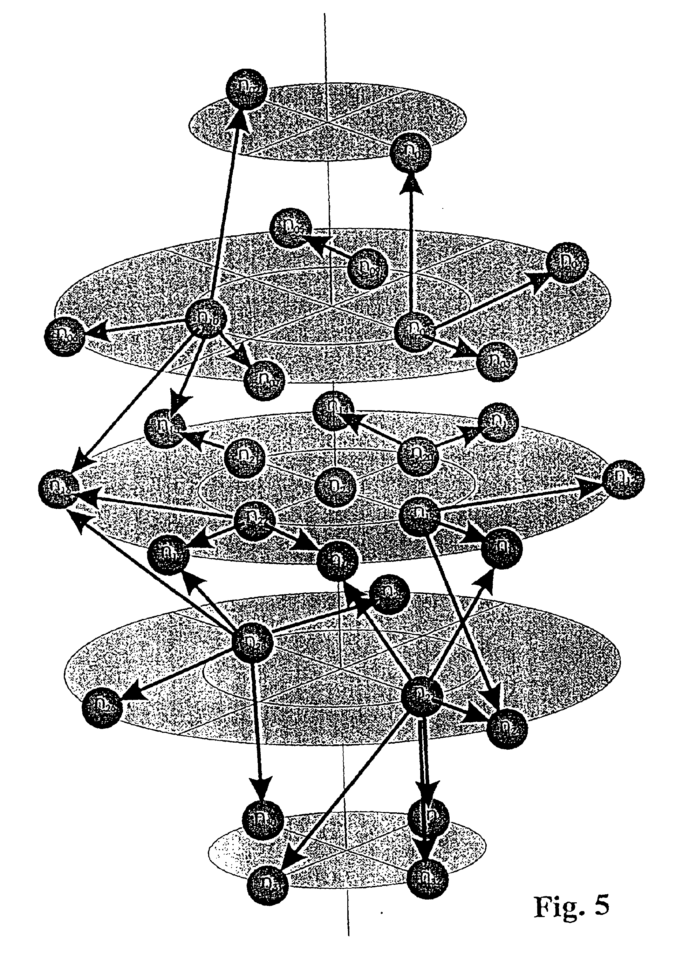

Figure 5 shows a visualization of the same network, after having been processed and generated by a data structure in accordance with the present invention. Again, each element has been placed on the circle it belongs to, but now in addition it has been carefully placed on a grid position on this circle such that the resulting visualization exhibits a near minimal entanglement of the links (again, only 1-2-links are shown). These placement decisions are done by the gradient approach described below. The assignment of the unique identifiers $n_{xy}$ has not changed.

In the following, an algorithmic description of a minimizing algorithm in accordance with the present invention is given. The algorithm below might for example be used to generate the data structure visualized in Figure 5 from the network data visualized in Figure 4. The following algorithm is one possible example to find a network visualization which exhibits a near minimal entanglement of the links.

beginning of algorithmic description

1. Place the user-selected central element $c$ on the central location

2. Find all first neighbors to the central element in the network, i.e. all elements which are directly connected to the central element:

$H = \{h_1, h_2, ...\}$ the set of all horizontal first neighbors
$U = \{u_1, u_2, ... \}$ the set of all upward first neighbors
$D = \{d_1, d_2, ... \}$ the set of all downward first neighbors

3. Find all second neighbors to the central element in the network, i.e. all elements which are directly connected to a first neighbor and are not first neighbors themselves:

$HH = \{hh_1, hh_2, ...\}$ the set of all horizontal-horizontal second neighbors
$UH = \{uh_1, uh_2, ...\}$ the set of all upward-horizontal second neighbors
$DH = \{dh_1, dh_2, ...\}$ the set of all downward-horizontal second neighbors
$UU = \{uu_1, uu_2, ...\}$ the set of all upward-upward second neighbors
$DD = \{dd_1, dd_2, ...\}$ the set of all downward-downward second neighbors

4. Determine the number $n$ of elements in the largest set of the collection $H, U, D, HH, UH, DH, UU, DD$. Fill all sets to a total of $n$ elements with dummy elements (they will not appear in the visualization)

5. Assign to each element in the sets $H, U, D, HH, UH, DH, UU,$ and $DD$ a random position $p$ $(0 < = p < n)$ on its circle (note that this can also be done with a placing algorithm)

6. Set the iteration counter $m = 1$

7. Compute for each element its local energy:

$$e_i = \left\{ \begin{array}{l} \frac{a_1 l_i + a_2 m_i + a_3 c_i}{n_i}, i \text{ is regular node} \\ 0, i \text{ is dummy node} \end{array} \right\}$$

where

$\alpha_1, \alpha_2,$ and $\alpha_3$ are weights (real numbers),
$l_i = \Sigma_{j \in I} \, length(x_{ij})$
$m_i = \Sigma_{j \in I'} \, length(x_{ij})$
$c_i = \frac{1}{2} \Sigma_{j \in I} \, cross(x_{ij})$
$n_i$ = the number of links connected with element i
$I$ = the set to which element i belongs
$(I = H, U, D, HH, UH, DH, UU, or DD)$
$I'$ = the union of all sets of all elements to which element i does not belong
$length(x_{ij})$ = length of link from element i to element j

$$cross(x_{ij}) = \left\{ \begin{array}{l} \text{number of crossings of the link from element } i \text{ to} \\ \text{element } j \text{ with all other links between elements of} \\ \text{the set } I, \text{ if the link from element } i \text{ to element } j \text{ exists} \\ 0, \text{ otherwise} \end{array} \right\}$$

8. Compute the total energy of the visualization: $E = \Sigma_i\, n_i\, e_i$, where the sum ranges over all elements in the sets *H, U, D, HH, UH, DH, UU,* and *DD*

9. Find the element $i_m$ with the *m-th highest* local energy (e.g. for *m = 1* the *highest* local energy)

10. Swap the positions of element $i_m$ with all elements $j\,\varepsilon\,I_m$ and compute the total energy of each visualization. Determine the swapping with the least total energy $E_{min}$

11. If $E_{min} < E$ perform this swapping and go back to step 7

12. Increment *m* by *l*

13. If *m < M = total number of first and second neighbors* go back to step 7

=== end of algorithmic description ===========================

This algorithm terminates in polynomial time with a near optimal arrangement of the elements on the grid positions so that the resulting visualization exhibits near minimal entanglement of the links

Note again that this algorithmic description is for illustrational purposes only. It can be modified in many places and still accomplish the same result. For instance, one modification is to compute in step 7 the local energy by dividing by the square root of $n_i$ (instead of $n_i$), and in turn in step 8 the total energy by multiplying by the square root of $n_i$ (instead of $n_i$).

The principles of the present algorithms may be applied in a wide range of systems. An algorithm in accordance with the present invention may be used singly or in combination with other algorithms.

A visualization tool that is based on the inventive scheme can be used to generate a data structure for displaying the respective network - or a portion thereof - on a display. Additional tools or routines can be employed to allow viewing of the network from different angles and view points. A user may also navigate through the network to get a better understanding of certain elements, links, and their association or relationship. Furthermore, the inventive scheme can also be used for

1. creating a network and corresponding data structure from scratch;

2. updating a network and the corresponding data structure (e.g. by adding an element or link);

3. acting upon an element or link kept in a network and the corresponding data structure.

These three processes are examples that indicate how flexible, powerful, and effective the present scheme is. The processes will now be outlined in connection with a database (network) that has a fractal hierarchical structure.

**1) Creating a network and corresponding data structure from scratch:** There are many ways to create a network. In the following, we shall concentrate on an approach where network data representing a network are generated manually. Using an appropriate editor or graphical user interface, a user may generate the network data by first defining some initial parameters of the network. This step is optional. Then, element after element is added and its relationships (links) are defined. General purpose tools or special tools can be used to do this.

As mentioned above, there are other ways to generate network data. One may for example use a system that extracts the elements and links from an input string in order to build network data.

Then, an algorithm in accordance with the present invention, for example the minimizing algorithm described above, is employed to convert the network data into a data structure for display on a graphics display. The network data are converted into some arrangement of elements which is defined to be the current arrangement with a corresponding current global value. A gradient method is then employed to transform the current arrangement to an optimal arrangement with a minimal or maximal, or near-minimal or near-maximal, global value.

Instead of using general purpose tools to add elements and links, the user may place new elements somewhere on the screen, preferably on an initially blank grid. In a next step, the user then may establish links between the elements to account for the new elements' relationships among themselves. A graphical user interface, e.g. a drag and drop technique and a snap to grid feature, may be used to do all this.

**2) Updating a network and the corresponding data structure:** In the following we shall concentrate on a situation where an element is added to a database. There are many other situations where the network and the corresponding data structure undergoes an update, e.g., if an element is removed, if a link is changed, if a relationship between elements is changed, and so forth. In all cases where the network data are updated the corresponding data structure may be re-calculated using an algorithm in accordance with the present invention, for example the minimizing algorithm described above.

If an element is to be added (for sake of simplicity herein referred to as new element) to a database the following steps may be carried out.

An input network is generated from an input string which describes the new element. This input network is deemed to be related to the new element. It may comprise information concerning the new element's relations to existing elements in the database. The database may be consulted in obtaining the input network. The input string can be created by a user or an application, or it can be automatically generated from the new element. This can be done by a mechanism that crawls through the new element to extract information which characterizes it and/or its content. An automatic object recognition scheme might be used for that purpose.

Instead of generating the input network from an input string, the content of the new element can be automatically analyzed and the result can be used to generate the input network. In this case an input string is not necessarily needed.

It is also conceivable that a combination of the above methods is employed to generate the input network. In this case, both an input string and the contents of the new element would be taken into consideration when generating the input network.

In the next step the database is updated with information describing or defining the new element. This can be done by associating the input network with the database, or by adding the new element or the input network to the database. If the database is of hierarchical nature and all elements are alike, then the input network which is to be added to the database preferably also has a fractal hierarchical structure.

Instead of generating and adding an input network, the user may manually add the new element directly to a network that is displayed on a screen. In order to do so, the user may place the new element somewhere on the screen, preferably in the adjacency of an element that he deems to be related to the new element. In a next step, the user then may establish links to other elements to account for the new element's relationships with these other elements. A graphical user interface, e.g. a drag and drop technique and a snap to grid feature, may be used to do all this.

In order to allow a system or user at a later point in time to act upon the new element, an access pointer may be needed. This access pointer provides a physical or logical link (e.g. a memory address) between the new element and some other instance or element. The access pointer can be used for accessing the new element in the database, or for retrieving the new element from the database, or for opening the new element using an appropriate application program (e.g., a text processor), or for displaying the new element, or for performing an operation on the access pointer as such. One might for example take the access pointer and send it to another user. The access pointer may describe the physical or logical location where said new element is stored in the database.

An algorithm in accordance with the present invention, for example the minimizing algorithm described above, is now employed to generate a data structure which represents the minimum or maximum of the global value. There are at least two different approaches A) and B) to do this. In any case, the new arrangement of elements, i.e. the arrangement of elements after the new element was added, is defined to be the current arrangement.

Approach A): The algorithm in accordance with the present invention, for example the minimizing algorithm described above, is applied to all elements of the network to find a new optimal arrangement from the current arrangement. This may yield a completely different data structure and visualization thereof.

Approach B): Instead of employing the algorithm to all elements of the network (approach A), one may simply take the newly added element and re-arrange it in the data structure until an arrangement with a global value is found that is lower or higher than the current global value. In most cases the approach B) will lead to sub-optimal solutions. However, it is an advantage of this approach that it is faster and less time consuming than approach A). It is a further advantage of approach B) that the user can more easily understand what happened after the new element was added, because the new arrangement remained almost the same. Approach A) may result in a completely different data structure and visualization thereof.

Note that there are two ways for adding an element to a database: 1) it either can be added physically to the database which means that the new element's content is moved into the database, or 2) it can be added logically. In this case the physical element remains outside the database, i.e., it is not moved into the database, but just a semantical unit or name representing this new element is added to the database.

**3) Acting upon an element or link kept in a network and the corresponding data structure:** If an element in a database is to be acted upon the following steps may be carried out. For sake of simplicity this element is herein referred to as target element.

Before a user or system can act upon the target element in the database, the respective element must be located. In order for the system to be able to locate the target element, an input string may be needed which contains information that helps to identify the element. This input string is received by the system. It may comprise keywords, or textual information. The keywords or textual information can either be human readable or machine readable. To improve the interaction between a user and the system, a speech recognition module can be employed such that the user can 'talk' to the system. The speech recognition module then transforms the speech into textual information which is then processed the same way as other input strings. Another way to improve the interaction between a user and the system is to install a camera that is used to record the user's behavior. An image recognition module then transforms the behavior into textual information which is then processed the same way as other input strings. In all cases the textual information may be evaluated by consulting the database.

Then, the input string is evaluated. This is done in order to obtain an input network which in turn defines a local network within the database. The local network is defined to be a portion, or segment, or set of segments of the database to which the input string is deemed to be related. The local network is defined such that it comprises at least one representation (e.g., a semantical unit or name) of the target element to which the input string seems to be related or associated. If no representation is found the process is stopped, or the user or system might be prompted for additional information which helps to clarify the information conveyed in the input string. The database may be consulted in obtaining the input network. The local network within the database can be defined such that it comprises representations of those elements which are in a (semantical) neighborhood (as computed from the distance function) to the element(s) of the input network. In other words, the local network within the database can be defined such that it comprises representations associated to the input string.

Assuming now, that at least one related or associated element was found, this element is displayed. The element can be displayed on a screen, for example, or it can be highlighted inside the network representing the database. The elements can be arranged or displayed to give the user clues about their contents. The system may create a human-understandable output, such as a map or other kind of visual or audible representation of the elements that the system deems are related to the target element the user is looking for. The present minimizing algorithm may be used to find the optimal arrangment of elements and links on a screen.

If there is just one element that is deemed to be related or associated to the input string, the user or the system can act upon the corresponding database element (target element) by using the access pointer that is associated with this particular element. The access pointer can be used for accessing the target element in the database, or for retrieving it from the database, or for opening it using an appropriate application program (e.g., a text processor), or for displaying it, or for performing an operation on the access pointer as such. One might for example take the access pointer and send it to another user. The access pointer may describe the physical or logical location where said target element is stored in the database.

If there is more than one element that is deemed to be related or associated to the input string, the user or system can act upon one or more of the respective database elements by using the access pointers that are associated with these elements. Alternatively, the user may be prompted for additional information to clarify the input string and reduce the number of elements that are deemed to be related or associated to the input string.

Instead of using the above approaches, the user himself may try to locate the target element on the display screen. This can be done by navigating through the displayed network and by looking for elements that the user considers to be related to the target element. After he was able to locate the respective element inside the network, the user can act upon it directly.

An element can be acted upon using a computer mouse, a key on a computer keyboard, or a combination of keys on a computer keyboard, for example.

An algorithm in accordance with the present invention, for example the minimizing algorithm described above, can be employed to find an optimal arrangement after the user acted upon one or more elements. This is only necessary, if the user has changed aspects of the database (network). E.g. after having changed or modified an element's relationship (links) with other elements, a re-calculation of the data structure may be desirable. For this purpose an algorithm in accordance with the present invention may be employed.

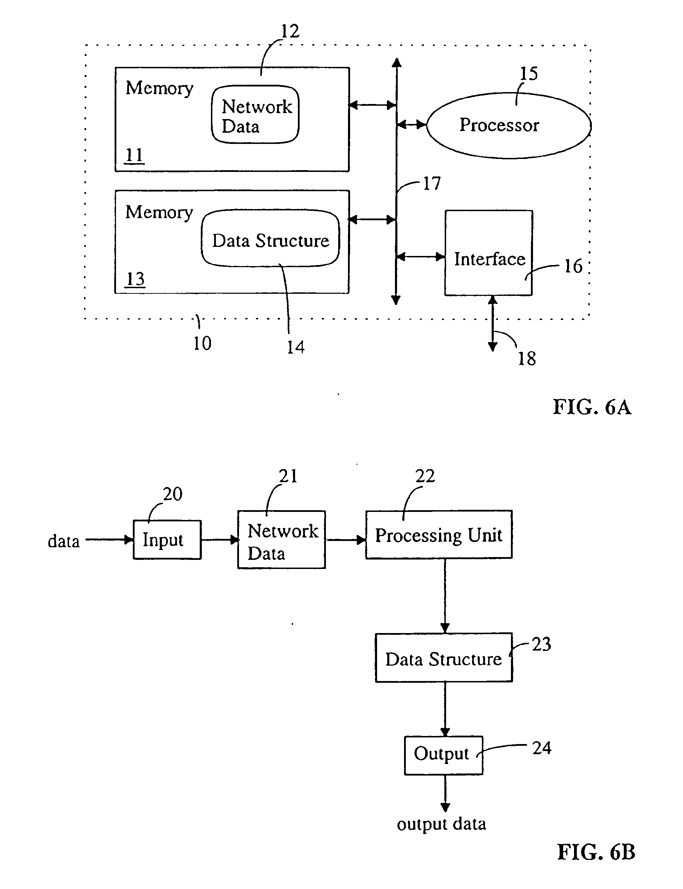

**First embodiment:** The schematic hardware structure of a visualization system 10, according to the present invention, is shown in Figure 6A. The system 10 comprises a memory 11 for storing network data 12, a memory 13 for storing the corresponding data structure 14, a processor 15 (CPU), an interface 16, a bus structure 17, and input/output means 18. The interface 16 and input/output means 18 allow the visualization system 10 to be connected to a display screen, network, or the like. Furthermore, the system 10 is capable of receiving input through the input/output means 18 and interface 16. Note that in the present embodiment there is one memory 11 for storing the network data 12 and one memory 13 for storing the data structure 14. The network data 12 and the data structure 14 can likewise be stored in one and the same memory. A tape drive, a hard disk drive, a semiconductor memory, or any other storage system may serve as memory.

In the present embodiment the network data 12 and the data structure 14 coexist. It is also conceivable that the network data 12 is step-by-step transformed into the corresponding data structure 14 such that at the end of this process there is just the data structure 14 but no network data anymore.

The corresponding logical block diagram is given in Figure 6B. According to the present invention, data are received via an input 20. These data are either network data, i.e., data which represent the elements and the relationships (links) between elements, or raw data which can be used to derive network data. In Figure 6B it is assumed that the received data are network data 21. If the received data are raw data, then an additional logical unit (e.g. a semantic processor or meaning extractor) is required that transforms the raw data into network data 21. The logical block diagram of the first embodiment comprises a processing unit 22 that embodies the present minimizing algorithm. The processing unit 22 may be realized in hardware and/or software. The unit 22 receives the network data 21 and applies an algorithm in accordance with the present invention in order to generate the data structure 23. This data structure 23 has a plurality of elements and links between elements. In a first step, the network data 21 are converted into some initial data structure representing an initial grid arrangement of the plurality of elements such that each element of the plurality of elements is placed on an individual grid position of a lattice. Then, a global value (global energy) is assigned to this initial grid arrangement of the plurality of elements whereby the global value depends on the initial grid arrangement of an element with respect to the current grid positions of said element's neighbors. In a subsequent step the initial grid arrangement is modified to generate another grid arrangement of the plurality of elements with a gradient method on the global value of the grid arrangement of the plurality of elements. At this point the processing may be stopped and the current grid arrangement of the plurality of elements is considered to be the final one.

Likewise, the above steps may be repeated until the global value of the current grid arrangement of the plurality of elements reaches a minimum. When this minimum is reached or almost reached, the processing may finally be stopped and the current grid arrangement of the plurality of elements is considered to be the final one.

This final grid arrangement is represented by a corresponding final data structure 23 which can be fed via output 24 to some graphics display system, or via a network or communications link to another system. Note that the final data structure 23 may either have a format that can be displayed on a display without further mapping or transformation, or it may have a format that has to be mapped or transformed into image data. In the present embodiment the data structure is formatted such that it can be displayed on a display screen without further transformation.

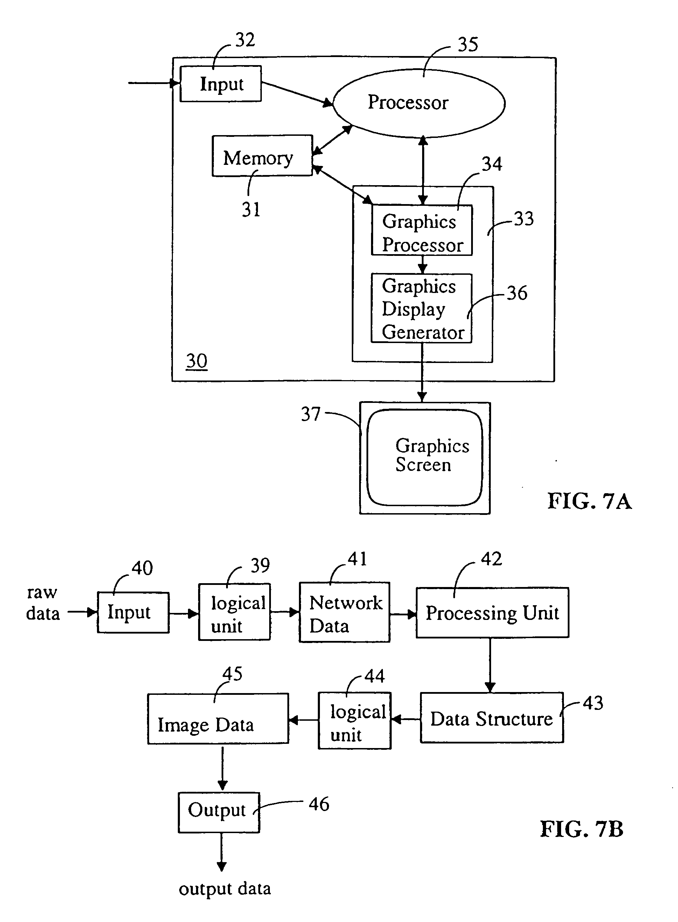

**Second embodiment:** The schematic hardware structure of a visualization system 30, according to the present invention, is shown in Figure 7A. This system 30 comprises an input 32. This input 32 may receive data from a keyboard, a mouse, or some other peripheral device, or from a communications link, for example. The system 30 furthermore comprises a memory 31 which stores the data, network data, and data structure. Memory 31 may be a random access memory (RAM) for example. There is also a processor 35 and an output interface 33 with a graphics processor 34 and a graphics display generator 36. The processor 35 accesses and/or fetches, as necessary, files (e.g. the network data and data structure) and programs (e.g. a program that embodies the present invention) from memory 31. The graphics processor 34 can be implemented as either a hardware circuit or as a software program recalled from memory 31 and executed by the processor 35. In operation, the graphics processor 34 produces image data (e.g., a pixel map) from the data structure. These image data are used by the graphics display generator 36 to produce, on graphics display 37, a graphical representation of the network data, as generated by the present minimizing algorithm. The image data may be stored in the memory 31, for example. There may also be a separate memory for storing the image data. The image data can also be stored on a storage medium (e.g. a diskette) such that they can be carried to another system. Image data can also be transmitted via a communications link, or network to another system.

The output interface 33 is connected to a graphics display 37. The system 30 comprises a computer program (not shown) that, when being executed by the processor 35, controls the system 30 such that it carries out the method which - according to the present invention - transforms the network data into a data structure that can then be processed by the interface 33 so that it can be displayed on the graphics display 37. This is very similar to what has been described in connection with the first embodiment. Accordingly, a detailed description of each of the steps is omitted for brevity.

The corresponding logical block diagram is given in Figure 7B. According to the present invention, raw data are received by an input 40. These raw data can be used to derive network data. A logical unit 39 (e.g. a semantic processor or meaning extractor) is employed that transforms the raw data into network data 41. The second embodiment further comprises a processing unit 42 that embodies the present minimizing algorithm. The processing unit 42 may be realized in hardware and/or software. The unit 42 receives the network data 41 and applies the minimizing algorithm in order to generate the data structure 43. Details of this process are described above and are not repeated for sake of brevity.

In the present example, the data structure 43 has a format that cannot be used for generating an image on the graphics display 37. An additional logical unit 44 is employed that produces appropriate image data 45 from the data structure 43. These image date 45 can be sent via an output 46 to the graphics display 37, for example.

The present invention can be used in different kinds of situations, environments, and systems. An algorithm in accordance with the present invention can also be employed to visualize details of a knowledge database, as described in the already mentioned PCT patent application with application number PCT/IB99/00231. This knowledge database is a fractal network that represents knowledge. It has a unique structure, as described in the co-pending PCT patent application. It is a kind of library describing the knowledge of the world, or a particular area of interest thereof, by using a well-defined structure that consists of components such as possible relevant types of semantical units (elements) and their possible mutual connections (links).

The structured representation of aspects of the world with the knowledge database is achieved by a multiscale approach. Self-similar representations are used on different scales to describe the behavior of the elements and links in a dynamical hierarchical fashion. Furthermore, self-similar algorithms are used when making use of the knowledge contained in this database (network). The knowledge database is a complex fractal hierarchical network of semantical units (elements).

Each connection object (link) may carry a fixed or variable weight (also called semantical distance), where a suitable function of the weight of a connection object (link) represents some kind of semantical distance between the two semantical units (elements) it connects, i.e., it represents the degree of (semantical) association between the two semantical units (elements) across this particular link. Weights may be used to compute the semantical distance of any two linked elements. Thus, this concept of semantical distance establishes a metric on the knowledge database. One can use these weights when visualizing a network, or a variable or fixed threshold below which connections are ignored when visualizing the network. So if two elements are connected through (for instance) three links (thus involving two more elements), and the product or other suitable combination of the three weights is below the threshold (or, equivalently, the sum or other suitable combination of the three distances is above a different threshold), then one can assume that there is no association between the two elements. This method allows to make the network local, i.e., each element has only a limited number of associations and the local network structure around each element is not too difficult. Instead of displaying the whole network with all its elements and links one may concentrate on the local network only.

Elements in the knowledge database may carry a "potential". If an element carries a potential it corresponds to the element's importance in relation to some other element or its importance within the network or a subnet. The potential can also be used when computing a data structure for visualization.

Programs built around the present scheme allow to visualize and graphically edit networks.

Another possible application is a three-dimensional (3D) visualization of site maps on the World Wide Web (WWW). The present invention can be used in connection with printed circuit board design systems as well. There are many more possible applications as almost all intelligent systems rely heavily on networks and their visualization.

The present invention allows to:

- visualize network information in an easily comprehensible way;
- format network information;
- make changes to the elements (nodes, etc.) and/or links (connections);
- make changes to the network's layout;
- explore networks;
- construct networks;
- maintain networks;
- show the topological structure of a network;
- align elements (nodes, etc.) and/or links (connections);
- visually inspect networks (graphs);
- fold/unfold areas or sections of a network;
- animate a network, the construction of a network, etc.;
- provide alternative views for networks (graphs);
- provide the optimal arrangement of elements of a network;
- provide a drag and drop interface;
- visualize dynamical hierarchical networks;
- visualize complex fractal hierarchical networks, and so forth.

The present invention can be realized in hardware, software, or a combination of hardware and software. A visualization tool according to the present invention can be realized in a centralized fashion in one computer system, or in a distributed fashion where different elements are spread across several interconnected computer systems. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

In the drawings and specification there have been set forth several embodiments of the invention and, although specific terms are used, the description thus given uses terminology in a generic and descriptive sense only and not for purposes of limitation.

**Claims**

1. A method for converting network data (21,41) into a data structure (23, 43) for use by a graphics display system, comprising the steps of

   a. receiving network data (21, 41) representing a network (1) with a plurality of elements (3) and links (2) between elements (3);
   b. converting the network data (21, 41) into a data structure (23, 43) representing a grid arrangement of the plurality of elements where each element of the plurality of elements is placed on an individual grid position of a lattice;
   c. assigning each element a local value which depends on the arrangement of said each element with respect to the grid positions of its neighbors of the plurality of elements and determining a global value as the sum of all local values for an initial grid arrangement of the plurality of elements; and
   d. modifying the initial grid arrangement to generate a new grid arrangement of the plurality of elements with a gradient method on the global value of the grid arrangement of the plurality of elements by modifying the initial grid arrangement starting with transposition of the element with the highest local value for the initial arrangement of the elements on the grid *with another element in the network* provided the global value of the resulting new grid arrangement is lower than that of said initial arrangement.

2. A method according to claim 1, including the further step of successively repeating steps c. and d., with at each repetition said new grid arrangement produced in the preceding step d. being regarded as the initial grid arrangement, so as to cause the global value of the grid arrangement of the plurality of elements to reduce towards a minimal global value of the network.

3. A method according to claim 1 wherein in determining said global value the sum of all local values is a weighted sum.

4. A method according to claim 1, wherein if in step d. the global value of the initial grid arrangement is not reduced by any possible transposition of the element with the highest local value into a new grid arrangement, transposition of the second highest local value element is tried to see if this will produce a reduced global value and then, If not, transposition of the third highest local value element is tried and so on until a reduction of global value is, if possible, achieved.

5. A method according to claim 1, whereby the gradient method allows shifting the emphasis between minimising the number of crossings of the links and minimising the length of the links, or any combination thereof.

6. A method according to claim 1, wherein for $n$ elements and $m$ links of total length $L$ and with a total number of crossings $C$, and where each element $i$ has $k_i$ connections with a total length of $l_i$ and a total number of crossings $c_i$ ($I \leq i \leq n$), the global value $E$ and the local value $e_I$ of each element $I$ is

$$E = 4 \cdot a \cdot C + 2 \cdot (1 - a) \cdot L$$

$$e_i = \frac{a \cdot c_i + (1-a) \cdot l_i}{\sqrt{k_i}}$$

and wherein the variable $\alpha$ is allowed to take values $0 \leq \alpha \leq 1$ and is a parameter that allows a user to shift the emphasis between minimizing the number or crossings $(\alpha = 1)$ and minimising the total length of the links $(\alpha = 0)$ or any combination thereof ($\alpha$ between $0$ and $1$).

7. A method according to claim 1, whereby the gradient method is of polynomial complexity.

8. A method according to claim 1, whereby an element or a link can be selectively suppressed.

9. A visualization tool (10; 30) for converting network data (21; 41), which represent a plurality of elements (3) and links (2) between elements (3), into a data structure (23; 43), which represents a grid arrangement of the plurality of elements (3) where each element of the plurality of elements (3) is placed on an individual grid position of a lattice, such that the data structure (23; 43) is suited for use by a graphics display (37), comprising:

   a storage device (11; 31) for storing the network data (21; 41);
   a storage device (11, 13; 31) for storing the data structure (23; 43); and
   a processing unit (22; 42) so arranged as to generate an initial data structure (23; 43), which represents an initial grid arrangement of the plurality of elements where each element of the plurality of elements is placed on an individual grid position of a lattice, and whereby:

   a. each element is assigned a local value which depends on the arrangement of said each element with respect to the grid positions of its neighbors of the plurality of elements and a global value is determined as the sum of all local values for an initial grid arrangement of the plurality of elements; and
   b. the initial grid arrangement is modified to generate a new grid arrangement of the plurality of elements with a gradient method on the global value of the grid arrangement of the plurality of elements by modifying the initial grid arrangement starting with transposition of the element with the highest local value for the initial arrangement of the elements on the grid *with another element in the network* provided the global value of the resulting new grid arrangement is lower than that of said initial arrangement.

10. A visualisation tool according to claim 9 wherein said processing unit (22;42) is further arranged to successively repeat said steps a. and b., with at each repetition said new grid arrangement produced in the preceding step d. being regarded as the initial grid arrangement, so as to cause the global value of the grid arrangement of the plurality of elements to reduce towards a minimal global value of the network.

11. A visualisation tool according to claim 9 wherein said processing unit is arranged in determining said global value to use a weighted sum of the local values.

12. A visualisation tool according to claim 9 wherein if in step d. the global value of the initial grid arrangement is not reduced by any possible transposition of the element with the highest local value into a new grid arrangement, transposition of the second highest local value element is tried to see if this will produce a reduced global value and then, if not, transposition of the third highest local value element is tried and so on until a reduction of global value is, if possible, achieved.

13. A visualisation tool according to claim 9, wherein one can shift the emphasis between minimising the number of crossings of the links and minimising the length of the links, or any combination thereof.

14. A visualisation tool according to claim 9, wherein an element or a link can be selectively suppressed.

15. A computer program product comprising a computer readable medium, having thereon:

   computer program code means, when said computer program is loaded, to make a visualisation tool convert network data (21, 41) into a data structure (23, 43) for use by a graphics display system, by executing procedure to:

   a. receive network data (21, 41) representing a network (1) with a plurality of elements (3) and links (2) between elements (3);
   b. convert the network data (21, 41) into a data structure (23, 43) representing a grid arrangement of the plurality of elements where each element of the plurality of elements is placed on an individual grid position of a lattice
   c. assign each element a local value which depends on the arrangement of said each element with respect to the grid positions of its neighbors of the plurality of elements and determining a global value as the sum of all local values for an initial grid arrangement of the plurality of elements; and
   d. modify the initial grid arrangement to generate a new grid arrangement of the plurality of elements with a gradient method on the global value of the grid arrangement of the plurality of elements by modifying the initial grid arrangement starting with transposition of the element with the highest local value for the initial arrangement of the elements on the grid *with another element in the network* provided the global value of the resulting new grid arrangement is lower than that of said initial arrangement.

16. A computer program prodect according to claim 15 which further executes procedure to successively repeat steps c. and d., with at each repetition said new grid arrangement produced in the preceding step d. being regarded as the initial grid arrangement, so as to cause the global value of the grid arrangement of the plurality of elements to reduce towards a minimal global value of the network.

17. A computer program product according to claim 15 wherein, in determining said global value, the sum of all local values is a weighted sum.

18. A computer program product according to claim 15 wherein if in step d. the global value of the initial grid arrangement is not reduced by any possible transposition of the element with the highest local value into anew grid arrangement, transposition of the second highest local value element is tried to see if this will produce a reduced global value and then, if not, transposition of the third highest local value element is tried and so on until a reduction of global value is, if possible, achieved.

19. A computer program product according to claim 15, whereby the gradient method allows shifting of the emphasis between minimising the number of crossings of the links and minimising the length of the links, or any combination thereof.

**Patentansprüche**

1. Verfahren zum Umwandeln von Netzwerkdaten (21, 41) in eine Datenstruktur (23, 43) zur Verwendung durch ein grafisches Anzeigesystem, wobei das Verfahren die folgenden Schritte umfasst:

   a. Empfangen von Netzwerkdaten (21, 41), die ein Netzwerk (1) mit einer Vielzahl von Elementen (3) und Verbindungen (2) zwischen den Elementen (3) wiedergeben;
   b. Umwandeln der Netzwerkdaten (21, 41) in eine Datenstruktur (23, 43), die eine Gitteranordnung der Vielzahl von Elementen wiedergibt, wobei jedes Element der Vielzahl von Elementen auf einem bestimmten Gitterplatz eines Rasters angeordnet ist.
   c. Zuweisen eines lokalen Wertes an jedes Element, wobei der Wert von der Anordnung des jeweiligen Elements in Bezug auf die Gitterpositionen seiner Nachbarn aus der Vielzahl von Elementen abhängt, und Ermitteln eines globalen Werts als die Summe aller lokalen Werte für eine Anfangs-Gitteranordnung der Vielzahl von Elementen; und
   d. Verändern der Anfangs-Gitteranordnung zum Erzeugen einer neuen Gitteranordnung der Vielzahl von Elementen mit einem Gradientenverfahren für den globalen Wert der Gitteranordnung der Vielzahl von Elementen, indem die Anfangs-Gitteranordnung verändert wird, beginnend mit dem Umsetzen des Elements mit dem größten lokalen Wert für die Anfangs-Gitteranordnung der Elemente auf dem Gitter im Tausch gegen *ein anderes Element in dem Netzwerk* unter der Voraussetzung, dass der globale Wert der entstandenen neuen Gitteranordnung niedriger ist als der Wert der Anfangsanordnung.

2. Verfahren nach Anspruch 1, das den weiteren Schritt des aufeinanderfolgenden Wiederholens der Schritte c. und d. beinhaltet, wobei bei jeder Wiederholung die neue, im vorangehenden Schritt d. erzeugte Gitteranordnung als die Anfangs-Gitteranordnung betrachtet wird, sodass der globale Wert der Gitteranordnung der Vielzahl von Elementen zu einem niedrigsten globalen Wert des Netzwerks hin verringert wird.

3. Verfahren nach Anspruch 1, wobei es sich beim Ermitteln des globalen Werts bei der Summe aller lokalen Werte um eine gewichtete Summe handelt.

4. Verfahren nach Anspruch 1, wobei, falls im Schritt d. der globale Wert der Anfangs-Gitteranordnung durch irgendein mögliches Umsetzen des Elements mit dem größten lokalen Wert in eine neue Gitteranordnung nicht verringert wird, das Umsetzen des Elements mit dem zweitgrößten lokalen Wert unternommen wird, um zu prüfen, ob damit der globalen Wert verringert wird, und falls nicht, dann das Umsetzen des Elements mit dem drittgrößten Wert unternommen wird usw., bis eine mögliche Verringerung des globalen Werts erreicht wird.

5. Verfahren nach Anspruch 1, wobei das Gradientenverfahren das Verschieben der Gewichtung zwischen dem Minimieren der Anzahl von Überkreuzungen der Verbindungen und dem Minimieren der Verbindungslängen oder eine Verknüpfung dieser beiden erlaubt.

**6.** Verfahren nach Anspruch 1, worin für $n$ Elemente und $m$ Verbindungen der Gesamtlänge $L$ und mit einer Gesamtanzahl von Überkreuzungen $C$, und wobei jedes Element $i$ $k_i$ Verbindungen mit einer Gesamtlänge von $l_i$ und einer Gesamtanzahl von Überkreuzungen $c_i$ ($1 \leq i \leq n$) aufweist, der globale Wert $E$ und der lokale Wert $e_i$ jedes Elements $i$

$$E = 4 \cdot a \cdot C + 2 \cdot (1 - a) \cdot L$$

$$e_i = \frac{a \cdot c_i + (1 - a) \cdot l_i}{\sqrt{k_i}}$$

beträgt, wobei die Variable $\alpha$ Werte $0 \leq \alpha \leq 1$ annehmen darf und einen Parameter darstellt, der einem Nutzer das Verschieben der Gewichtung zwischen dem Minimieren der Anzahl von Verbindungen ($\alpha = 1$) und dem Minimieren der Gesamtlänge der Verbindungen ($\alpha = 0$) oder eine Verknüpfung der beiden ($\alpha$ zwischen 0 und 1) erlaubt.

**7.** Verfahren nach Anspruch 1, wobei das Gradientenverfahren von polynomialer Komplexität ist.

**8.** Verfahren nach Anspruch 1, wobei ein Element oder eine Verbindung selektiv unterdrückt werden kann.

**9.** Visualisierungswerkzeug (10; 30) zum Umwandeln von Netzwerkdaten (21; 41), die eine Vielzahl von Elementen (3) und Verbindungen (2) zwischen den Elementen (3) wiedergeben, in eine Datenstruktur (23; 43), die eine Gitteranordnung der Vielzahl von Elementen (3) wiedergibt, wobei jedes Element der Vielzahl von Elementen (3) auf einem bestimmten Gitterplatz eines Rasters angeordnet ist, sodass die Datenstruktur (23;43) zur Verwendung durch eine grafische Anzeige (37) geeignet ist, wobei das Visualisierungswerkzeug das Folgende umfasst:

eine Speichereinheit (11; 31) zum Speichern der Netzwerkdaten (21; 41),
eine Speichereinheit (11; 13; 31) zum Speichern der Datenstruktur (23; 43); und
eine Verarbeitungseinheit (22; 42), die so beschaffen ist, dass sie eine Anfangs-Datenstruktur (23; 43) erzeugt, die eine Anfangs-Gitteranordnung der Vielzahl von Elementen wiedergibt, wobei jedes Element der Vielzahl von Elementen auf einem bestimmten Gitterplatz eines Rasters angeordnet ist, und wobei:

a. jedem Element ein lokaler Wert zugewiesen wird, der von der Anordnung des jeweiligen Elements in Bezug auf die Gitterpositionen seiner Nachbarn aus der Vielzahl von Elementen abhängt, und ein globaler Wert als die Summe aller lokalen Werte für eine Anfangs-Gitteranordnung der Vielzahl von Elementen ermittelt wird; und
b. die Anfangs-Gitteranordnung zum Erzeugen einer neuen Gitteranordnung der Vielzahl von Elementen mit einem Gradientenverfahren für den globalen Wert der Gitteranordnung der Vielzahl von Elementen verändert wird, indem die Anfangs-Gitteranordnung verändert wird, beginnend mit dem Umsetzen des Elements mit dem größten lokalen Wert für die Anfangs-Gitteranordnung der Elemente auf dem Gitter im Tausch *gegen ein anderes Element in dem Netzwerk* unter der Voraussetzung, dass der globale Wert der resultierenden neuen Gitteranordnung niedriger ist als der Wert der Anfangsanordnung.

**10.** Visualisierungswerkzeug nach Anspruch 9, wobei die Verarbeitungseinheit (22; 42) ferner so beschaffen ist, dass sie nacheinander die Schritte a. und b. wiederholt, wobei bei jeder Wiederholung die im vorangehenden Schritt b. erzeugte neue Gitteranordnung als die Anfangs-Gitteranordnung betrachtet wird, sodass der globale Wert der Gitteranordnung der Vielzahl von Elementen zu einem niedrigsten globalen Wert des Netzwerks hin verringert wird.

**11.** Darstellungswerkzeug nach Anspruch 9, wobei die Verarbeitungseinheit so beschaffen ist, dass sie beim Ermitteln des globalen Werts eine gewichtete Summe der lokalen Werte verwendet.

**12.** Darstellungswerkzeug nach Anspruch 9, wobei, falls im Schritt b. der globale Wert der Anfangs-Gitteranordnung durch irgendeine mögliche Vertauschung des Elements mit dem größten lokalen Wert in eine neue Gitteranordnung nicht verringert wird, das Umsetzen des Elements mit dem zweitgrößten lokalen Wert unternommen wird, um zu prüfen, ob dies zu einem verringerten globalen Wert führt, und wenn nicht, dann das Umsetzen des Elements mit

**EP 1 085 693 B1**

dem drittgrößten Wert unternommen wird usw., bis eine mögliche Verringerung des globalen Werts erreicht wird.

**13.** Visualisierungswerkzeug nach Anspruch 9, wobei die Gewichtung zwischen dem Minimieren der Anzahl von Überkreuzungen und dem Minimieren der Verbindungslängen oder einer Verknüpfung der beiden verändert werden kann.

**14.** Visualisierungswerkzeug nach Anspruch 9, wobei ein Element oder eine Verbindung selektiv unterdrückt werden kann.

**15.** Computerprogramm-Produkt, das ein maschinenlesbares Medium umfasst, worauf Folgendes enthalten ist:

ein Computerprogramm-Mittel, das beim Laden des Computerprogramms ein Visualisierungswerkzeug dazu veranlasst, Netzwerkdaten (21, 41) in eine Datenstruktur (23, 43) zur Verwendung durch ein grafisches Anzeigesystem umzuwandeln, indem es das folgende Verfahren ausführt:

a. Empfangen von Netzwerkdaten (21, 41), die ein Netzwerk (1) mit einer Vielzahl von Elementen (3) und Verbindungen (2) zwischen den Elementen (3) wiedergeben;

b. Umwandeln der Netzwerkdaten (21, 41) in eine Datenstruktur (23, 43), die eine Gitteranordnung der Vielzahl von Elementen wiedergibt, wobei jedes Element der Vielzahl von Elementen auf einem bestimmten Gitterplatz eines Rasters angeordnet ist;

c. Zuweisen eines lokalen Werts an jedes Element, abhängig von der Anordnung des jeweiligen Elements mit Bezug auf die Gitterpositionen seiner Nachbarn aus der Vielzahl von Elementen und das Ermitteln eines globalen Werts als die Summe aller lokalen Werte für eine Anfangs-Gitteranordnung der Vielzahl von Elementen; und

d. Verändern der Anfangs-Gitteranordnung zum Erzeugen einer neuen Gitteranordnung der Vielzahl von Elementen mit einem Gradientenverfahren für den globalen Wert der Gitteranordnung der Vielzahl von Elementen, indem die Anfangs-Gitteranordnung verändert wird, beginnend mit dem Umsetzen des Elements mit dem größten lokalen Wert für die Anfangs-Gitteranordnung der Vielzahl von Elementen auf dem Gitter im Tausch gegen *ein anderes Element in dem Netzwerk* unter der Voraussetzung, dass der globale Wert der entstehenden neuen Gitteranordnung kleiner ist als der Wert der Anfangs-Gitteranordnung.

**16.** Computerprogramm-Produkt nach Anspruch 15, das des Weiteren nacheinander die Schritte c. und d. ausführt, wobei bei jeder Wiederholung die im vorangehenden Schritt d. erzeugte Gitteranordnung als die Anfangs-Gitteranordnung betrachtet wird, sodass der globale Wert der Gitteranordnung zu einem niedrigsten globalen Wert des Netzwerks hin verringert wird.

**17.** Computerprogramm-Produkt nach Anspruch 15, wobei es sich beim Ermitteln des globalen Werts bei der Summe aller lokalen Werte um eine gewichtete Summe handelt.

**18.** Computerprogramm-Produkt nach Anspruch 15, wobei, falls im Schritt d. der globale Wert der Anfangs-Gitteranordnung durch irgendein mögliches Umsetzen des Elements mit dem größten lokalen Wert in eine neue Gitteranordnung nicht verringert wird, das Umsetzen des Elements mit dem zweitgrößten lokalen Wert unternommen wird, um zu prüfen, ob dies zu einem niedrigeren globalen Wert führt, und wenn nicht, dann das Umsetzen des Elements mit dem drittgrößten Wert unternommen wird usw., bis eine mögliche Verringerung des globalen Werts erreicht wird.

**19.** Computerprogramm-Produkt nach Anspruch 15, wobei das Gradientenverfahren das Verschieben der Gewichtung zwischen dem Minimieren der Anzahl von Überkreuzungen und dem Minimieren der Verbindungslängen oder einer Verknüpfung der beiden erlaubt.

**Revendications**

**1.** Procédé de conversion de données de réseau (21, 41) en une structure de données (23, 43) à utiliser par un système d'affichage graphique, comprenant les étapes consistant à :

a. recevoir les données de réseau (21, 41) représentant un réseau (1) comportant une pluralité d'éléments (3) et de liaisons (2) entre éléments (3),

b. convertir les données de réseau (21, 41) en une structure de données (23, 43) représentant un agencement en grille de la pluralité d'éléments, où chaque élément parmi la pluralité d'éléments est placé à une position individuelle sur un treillis,

c. affecter à chaque élément une valeur locale qui dépend de l'agencement dudit chaque élément par rapport aux positions de grille de ses voisins parmi la pluralité d'éléments et déterminer une valeur globale comme étant la somme de toutes les valeurs locales pour un agencement initial en grille de la pluralité d'éléments, et

d. modifier l'agencement initial en grille pour générer un nouvel agencement en grille de la pluralité d'éléments par le biais d'une méthode de gradient sur la valeur globale de l'agencement en grille de la pluralité d'éléments en modifiant l'agencement initial en grille en commençant par la transposition de l'élément ayant la valeur locale la plus haute pour l'agencement initial des éléments en grille par un autre élément du réseau sous réserve que la valeur globale du nouvel agencement en grille résultant soit inférieure à celle dudit agencement initial.

2. Procédé selon la revendication 1, comprenant l'étape supplémentaire consistant à répéter successivement les étapes c et d, le nouvel agencement en grille produit au cours de l'étape d. précédente étant considéré à chaque répétition comme l'agencement initial en grille, de manière à amener la valeur globale de l'agencement en grille de la pluralité d'éléments à diminuer vers une valeur globale minimale du réseau.

3. Procédé selon la revendication 1, dans lequel, lors de la détermination de ladite valeur globale, la somme de toutes les valeurs locales est une somme pondérée.

4. Procédé selon la revendication 1 dans lequel, si, dans une étape d, la valeur globale de l'agencement initial en grille n'est pas réduite par une transposition éventuelle de l'élément ayant la valeur locale la plus haute dans un nouvel agencement en grille, la transposition de l'élément ayant la deuxième valeur locale la plus haute est essayée pour voir si cela produira une valeur globale réduite et ensuite, si ce n'est pas le cas, la transposition de l'élément ayant la troisième valeur locale la plus haute est essayée, et ainsi de suite, jusqu'à ce qu'une réduction de la valeur globale soit obtenue, si cela est possible.

5. Procédé selon revendication 1, grâce auquel la méthode de gradient permet de faire passer l'accent de la minimisation du nombre de croisements des liaisons à la minimisation de la longueur des liaisons ou inversement, ou à toute combinaison de ceux-ci.

6. Procédé selon la revendication 1, dans lequel, pour $n$ éléments et $m$ liaisons ayant une longueur totale $L$ et un nombre total de croisements $C$, et où chaque élément $i$ a $k_i$ connexions ayant une longueur totale $l_i$ et un nombre total de croisements $c_i$ ($1 \leq i \leq$ n), la valeur globale $E$ et la valeur locale $e_i$ de chaque élément $i$ est

$$E = 4 \cdot \alpha \cdot C + 2 \cdot (1-\alpha) \cdot L$$

$$e_i = \frac{\alpha \cdot c_i + (1-\alpha) \cdot l_i}{\sqrt{k_i}}$$

et dans lequel la variable $\alpha$ peut prendre des valeurs telles que $0 \leq \alpha \leq 1$ et est un paramètre qui permet à l'utilisateur de faire passer l'accent de la minimisation du nombre de croisements ($\alpha = 1$) à la minimisation de la longueur totale des liaisons ($\alpha = 0$) ou inversement ou à toute combinaison de ceux-ci ($\alpha$ compris entre $0$ et $1$).

7. Procédé selon la revendication 1, dans lequel la méthode de gradient présente une complexité polynomiale.

8. Procédé selon la revendication 1, dans lequel un élément ou une liaison peut être sélectivement supprimé.

9. Outil de visualisation (10 ; 30) pour convertir des données de réseau (21 ; 41) qui représentent une pluralité d'éléments (3) et de liaisons (2) entre éléments (3), en une structure de données (23 ; 43), qui représente un agencement en grille de la pluralité d'éléments (3), où chaque élément parmi la pluralité d'éléments (3) est placé à une position individuelle de grille d'un treillis, de sorte que la structure de données (23 ; 43) convient à une utilisation par un dispositif d'affichage graphique (37) comprenant :

un dispositif de mémorisation (11 ; 31) destiné à mémoriser les données de réseau (21 ; 41),

un dispositif de mémorisation (11, 13 ; 31) destiné à mémoriser la structure de données (23 ; 43) et

une unité de traitement (22 ; 42) conçue de manière à générer une structure de données initiale (23 ; 43) qui représente un agencement initial en grille de la pluralité d'éléments où chaque élément parmi la pluralité d'éléments est placé à une position individuelle de grille d'un treillis et grâce à quoi :

a. chaque élément se voit affecter une valeur locale qui dépend de l'agencement dudit chaque élément par rapport aux positions de grille de ses voisins parmi la pluralité d'éléments et une valeur globale est déterminée comme étant la somme de toutes les valeurs locales pour l'agencement initial en grille de la pluralité d'éléments et

b. l'agencement initial en grille est modifié pour générer un nouvel agencement en grille de la pluralité d'éléments avec une méthode de gradient sur la valeur globale de l'agencement en grille de la pluralité d'éléments en modifiant l'agencement initial en grille en commençant par la transposition de l'élément ayant la valeur locale la plus haute pour l'agencement initial des éléments en grille par un autre élément dans le réseau, sous réserve que la valeur globale du nouvel agencement en grille résultant soit inférieure à celle du dit agencement initial.

**10.** Outil de visualisation selon la revendication 9, dans lequel ladite unité de traitement (22;42) est en outre conçue pour répéter successivement desdites étapes a. et b., ledit nouvel agencement en grille produit lors de l'étape d. précédente étant considéré à chaque répétition comme étant l'agencement initial en grille, de manière à amener la valeur de globale de l'agencement en grille de la pluralité d'éléments à diminuer vers une valeur globale minimale du réseau.

**11.** Outil de visualisation selon la revendication 9, dans lequel ladite unité de traitement est conçue pour utiliser une somme pondérée des valeurs locales lors de la détermination de ladite valeur globale.

**12.** Outil de visualisation selon la revendication 9 dans lequel, si, lors de l'étape d., la valeur globale de l'agencement initial en grille n'est pas réduite par une transposition éventuelle de l'élément ayant la valeur locale la plus haute dans un nouvel agencement en grille, la transposition de l'élément ayant la deuxième valeur locale la plus haute est essayée pour voir si cela produira une valeur globale réduite et ensuite, si ce n'est pas le cas, la transposition de l'élément ayant la troisième valeur locale la plus haute est essayée, et ainsi de suite, jusqu'à ce qu'une réduction de la valeur globale soit obtenue, si cela est possible.

**13.** Outil de visualisation selon la revendication 9, dans lequel on peut faire passer l'accent du nombre de croisements des liaisons à la minimisation de la longueur des liaisons ou inversement ou à toute combinaison de ceux-ci.

**14.** Outil de visualisation selon la revendication 9, dans lequel un élément ou une liaison peut être supprimé sélectivement.

**15.** Produit de programme informatique comprenant un support lisible par un ordinateur comportant sur celui-ci :

un moyen de code de programme informatique, lorsque ledit programme informatique est chargé, destiné à amener un outil de visualisation à convertir des données de réseau (21, 41) en une structure de données (23, 43) en vue d'une utilisation par un système d'affichage graphique, en exécutant une procédure pour :

a. recevoir des données de réseau (21, 41) représentant un réseau (1) comportant une pluralité d'éléments (3) et de liaisons (2) entre les éléments,

b. convertir les données de réseau (21, 41) en une structure de données (23, 43) représentant un agencement en grille de la pluralité d'éléments où chaque élément parmi la pluralité d'éléments est placé à une position individuelle de grille d'un treillis,

c. affecter à chaque élément une valeur locale qui dépend de l'agencement dudit élément par rapport aux positions de grille de ses voisins parmi la pluralité d'éléments et déterminer une valeur globale comme étant la somme de toutes les valeurs locales pour un agencement initial en grille de la pluralité d'éléments et

d. modifier l'agencement initial en grille pour générer un nouvel agencement en grille de la pluralité d'éléments par le biais d'une méthode de gradient sur la valeur globale de l'agencement en grille de la pluralité d'éléments en modifiant l'agencement initial en grille en commençant par la transposition de l'élément ayant la valeur locale la plus haute pour l'agencement initial des éléments en grille par un autre élément du réseau, sous réserve que la valeur globale du nouvel agencement en grille résultant soit plus basse que celle du dit agencement initial.

**16.** Produit de programme informatique selon la revendication 15, qui exécute en outre une procédure pour répéter successivement les étapes c. et d., ledit nouvel agencement en grille produit lors de l'étape d. précédente étant considéré à chaque répétition comme étant un agencement initial en grille, de manière à amener la valeur globale de l'agencement en grille de la pluralité d'éléments à diminuer vers une valeur globale minimale du réseau.

**17.** Produit de programme informatique selon la revendication 15, dans lequel, lors de la détermination de ladite valeur globale, la somme de toutes les valeurs locales est une somme pondérée.

**18.** Produit de programme informatique selon la revendication 15 dans lequel, si, lors d'une étape d., la valeur globale de l'agencement initial en grille n'est pas réduite par une transposition éventuelle de l'élément ayant la valeur locale la plus haute dans un nouvel agencement en grille, la transposition de l'élément ayant la deuxième valeur locale la plus haute est essayée pour voir si cela produira une valeur globale réduite et ensuite, si ce n'est pas le cas, la transposition de l'élément ayant la troisième valeur locale la plus haute est essayée, et ainsi de suite, jusqu'à ce qu'une réduction de la valeur globale soit obtenue, si cela est possible.

**19.** Produit de programme informatique selon la revendication 15, grâce auquel la méthode de gradient permet de faire passer l'accent de la minimisation du nombre de croisements des liaisons à la minimisation de la longueur des liaisons, ou inversement, ou à toute combinaison de ceux-ci.

Fig. 1

**Fig. 2**

67

62

65

60

61

64

63

66

68

**Fig. 3**

Fig. 4

Fig. 5

FIG. 6A

FIG. 6B

FIG. 7A

FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5043920 A
- EP 0903693 A
- WO 9900231 W

### Non-patent literature cited in the description

- **George Robertson ; Jock Mackinlay ; Stuart Card.** Information visualization using 3D interactive animation. *Communications of the ACM,* 1993, vol. 36 (4), 57-71
- **M. Clarkson.** *Easier Interface, Byte Magazine,* February 1991
- **Di Battista.** An experimental comparison of four graph drawing algorithms. *Computational Geometry,* 1997, vol. 7, 303-325
- **R. Tamassia.** An algorithm for drawing a hierarchical graph. *Int. J. Comput. Geom. Appl. (Singapore),* June 1996, vol. 6 (2), 145-155
- **R. Tamassia.** GIOTTO3D: a system for visualizing hierarchical structures in 3D. *Graph Drawing, Symposium on Graph Drawing, GD '96,* 1996, 193-198
- Aesthetics-based Graph Layout for Human Consumption. **Coleman Mk et al.** SOFTWARE-PRACTICE AND EXPERIENCE. John Wiley & Sons, 01 December 1996, vol. 26, 1415-1438
- **Davidson R et al.** Drawing Graphs Nicely Using Simulated Annealing. *ACM TRANSACTIONS ON GRAPHICS,* October 1996, vol. 15 (4), ISSN 0730-0301, 301-331
- iggle: Java interactive graph ;ayout environment. **Tunkelang D.** PROCEEDINGS, GRAPH DRAWING. 6TH INTERNATIONAL SYMPOSIUM GD'98. Springer-Verlag, 13 August 1998, 413-422
- **Stuart K. Card et al.** Information Visualization; Using Vision to Think. Morgan Kaufmann Publishers, Inc, 1999, 26-34